# EUROPÄISCHE PATENTSCHRIFT

(11) **EP 2 163 804 B1**
(45) Veröffentlichungstag und Bekanntmachung des Hinweises auf die Patenterteilung: **12.10.2011**
(21) Anmeldenummer: 09010963.8
(22) Anmeldetag: 27.08.2009
(51) Int. Cl.: F16N 7/38, F16N 29/02, C03B 40/027

(54) **Verfahren und Vorrichtung zur Schmierstoffversorgung einer I.S.-Glasformmaschine**
Method and device for lubricant supply of an I.S glass forming machine
Procédé et dispositif d'alimentation en lubrifiant d'une machine de moulage de verre I.S.

(30) Priorität: 10.09.2008 DE 102008046655
(43) Veröffentlichungstag der Anmeldung: 17.03.2010
(73) Patentinhaber: Heye International GmbH, 31683 Obernkirchen (DE)
(72) Erfinder: Felgenhauer, Benedikt, Dr., 32049 Herford (DE); Engler, Thomas, 31688 Nienstädt (DE); Isensee, Dennis, 31698 Lindhorst (DE)
(74) Vertreter: Callies, Rainer Michael

(56) Entgegenhaltungen:
- EP-A1- 0 931 974
- DE-T2- 69 433 065
- US-A- 4 657 115

## Beschreibung

Die Erfindung bezieht sich auf ein Verfahren und eine Vorrichtung nach dem Oberbegriff des Anspruchs 1 bzw. des Anspruchs 7.

Herkömmlich sind Zentralschmieranlagen für I.S.-Glasformmaschinen bekannt, die auf der Basis von Verlustschmierungen arbeiten und nur einen Schmierkreis aufweisen. Die Länge des Zeitintervalls zwischen zwei Schmiervorgängen richtet sich dabei nach der Schmierstelle, die als erstes nachgeschmiert werden muss. In der Regel werden in diesen Anlagen Schmierstoffverteiler derselben Größe verwendet, so dass das abgegebene Schmierstoffquantum pro Schmiervorgang eines Schmierzyklus für alle Schmierstellen gleich groß ist, unabhängig von der geometrischen Größe der Schmierstelle. Dadurch wird die Mehrheit der Schmierstellen zu häufig und mit zu viel Schmierstoff versorgt.

Um solch eine Überschmierung zu verringern, werden seit einiger Zeit Anlagen mit einem System von mehreren Schmierkreisen eingesetzt. Jeder Schmierkreis weist eine Gruppe von Schmierstellen auf, die nach dem Kriterium einer angemessenen Länge des Schmierintervalls zusammengefasst sind. Auf diese Weise wird jede Gruppe von Schmierstellen durch den eigenen Schmierkreis in einem von den anderen Schmierkreisen unabhängigen Schmierzyklus mit Schmierstoff versorgt.

Obwohl eine solche bedarfsgerechte Schmierintervallsteuerung eine deutliche Verbesserung gegenüber den erstgenannten Zentralschmieranlagen darstellt, ist bei diesen bekannten Mehrkreis-Schmieranlagen in der Regel vorgesehen, dass die Zeiten einmal eingestellt werden und für den Rest der Lebensdauer der I.S.-Glasformmaschine unverändert bleiben. Dabei ist jedoch nicht berücksichtigt, dass die meisten Glasformmaschinen einem häufigen Jobwechsel unterliegen, bei dem sich die Größe der Hohlglasartikel, die Maschinengeschwindigkeit und weitere Parameter ändern. Aus der Praxis sind inzwischen solche Mehrkreis-Schmiersysteme mit einer Steuerungseinheit (Firmen Graphoidal Ltd., Dronfield, Vereinigtes Königreich und Graphoidal Developments Ltd., Chesterfield, Vereinigtes Königreich) bekannt, bei denen durch eine Programmierung des Anwenders die Zeitintervalllängen eines Schmierkreises unabhängig voneinander verändert werden können. Dies ermöglicht Schmierstoffeinsparungen, die insbesondere bei der Verwendung von synthetischem Öl nicht nur in Bezug auf eine Umweltbelastung, sondern auch finanziell eine erhebliche Verbesserung darstellen ("Throwing it all away", A. Lawrence, Glass 79(2002)5, Seite 162; "Managing modern lubricants", A. Lawrence, Glass 80(2003)2, Seiten 52-53). Jeder Schmierkreis lässt sich dabei über nur eine einzige Pumpe unabhängig über ein jeweiliges Ventil mit unterschiedlich voreingestellten Zeitintervalllängen bzw. Pausenzeiten versorgen.

Grundsätzlich erlaubt eine solche Schmieranlage zwar, verschiedene Schmierstellen unterschiedlich oft zu schmieren. Es bleibt aber dem Anwender überlassen, wie er die Kreise aufteilt und wie oft er sie schmiert. Eine Regelung der an den Schmierstellen vorhandenen Schmierstoffmengen findet nicht statt. So wird durch Graphoidal Developments Ltd. die Möglichkeit beschrieben, unterschiedliche Zeitintervalllängen für verschiedene Mechanismen vorzusehen, wie Mechaniken einer jeweiligen Sektion der I.S.-Glasformmaschine, den Plungermechanismus, die Feeder-Mechanik, den Scherenmechanismus, das Maschinenband und Handhabungselemente in dem Formungsbereich. Es wird somit eine Gruppierung der Schmierstellen in Schmierkreise nahegelegt, bei denen die örtliche Anordnung das Kriterium der Zuordnung bildet. Für das Ziel einer Reduktion des Schmierstoffverbrauchs ist dieses Kriterium jedoch wenig geeignet, da für Verdampfungsverluste des Schmierstoffs die Temperatur der jeweiligen Schmierstelle von ganz überwiegender Bedeutung ist. Die Temperaturen der Schmierstellen könnten jedoch auch bei einer relativ ähnlichen räumlichen Anordnung deutlich voneinander abweichen. So streuen beispielsweise die Temperaturwerte in dem Bereich der Sektionsmechaniken über einen Bereich von bis zu 200 °C.

Zusätzlich zu solch einem gattungsgemäßen Verfahren bzw. solch einer gattungsgemäßen Vorrichtung gibt es folgenden Stand der Technik:
Aus der EP 1 043 483 A1 ist bekannt, eine kennfeldbezogene Regelung von Schmierstoffpumpen für Brennkraftmaschinen vorzusehen, wobei auch eine Temperaturmessung an einer zu schmierenden Stelle vorgesehen sein kann. Das Kennfeld betrifft jedoch Soll-Druckwerte des Schmierstoffs.

Aus der DE 200 22 934 U1 ist eine Berücksichtigung der Verdampfung von Schmierstoff an sich bekannt (vgl. Seite 5, letzter Absatz).

Die DE 694 33 065 T2 bezieht sich speziell auf die Versorgung eines Wälzlagers mit Schmierstoff, wobei auch die Verwendung von Kennfeldern zur Steuerung der Schmierstoffdosierung grundsätzlich genannt ist.

Ferner sei noch die DE 35 32 203 A1 erwähnt, welche sich auf eine bestimmte Art der Schmierung einer sich öffnenden Gussform einer I.S.-Glasformmaschine bezieht.

Der Erfindung liegt daher die Aufgabe zugrunde, ein gattungsgemäßes Verfahren vorzusehen, mit dem der Schmierstoffverbrauch auf einfache Weise weiter reduziert werden kann. Ferner liegt der Erfindung die Aufgabe zugrunde, eine zur Durchführung dieses Verfahrens geeignete gattungsgemäße Vorrichtung zur Verfügung zu stellen.

Die Aufgabe bezüglich des Verfahrens wird durch die Merkmale des Anspruchs 1 gelöst. Die für eine I.S.-Glasformmaschine vorgesehene Schmieranlage, welche bei dem Verfahren verwendet wird, weist eine Mehrzahl von Schmierstoffverteilern auf. Diese Schmierstoffverteiler dienen zur Ausgabe von Schmierstoff, z.B. Öl, an eine Mehrzahl von Schmierstellen der Glasformmaschine. Die Schmierstoffverteiler gehören jeweils zu einem von mehreren Schmierkreisen der Schmieranlage und können einer oder mehreren Schmierstellen zugeordnet sein. Dabei ist vorgesehen, dass alle Schmierstoffverteiler eines jeweiligen Schmierkreises zyklisch bzw. regelmäßig mit einem für den jeweiligen Schmierkreis vorgegebenen Zeitintervall gleichzeitig ein vorbestimmtes Quantum Schmierstoff ausgeben. Dabei kann allerdings das ausgegebene Schmierstoffquantum für die Schmierstoffverteiler eines Schmierkreises unterschiedlich sein. Das Zeitintervall kann auch als Schmierzykluszeit bezeichnet werden.

Die Schmierstoffverteiler sind jeweils einem Schmierkreis in Abhängigkeit von Temperaturen, die bei einer Reihe von oder allen Schmierstellen in deren unmittelbarer Nähe gemessen worden sind, so zugeordnet worden, dass die Temperaturen der Schmierstellen eines Schmierkreises innerhalb eines vorbestimmten Temperaturbereiches liegen. Wenngleich die Formulierung "in unmittelbarer Nähe" auch die Möglichkeit einer unmittelbar an der Schmierstelle stattfindenden Temperaturmessung einschließen soll, ist in der Regel aus praktischen Gründen eine Temperaturmessung benachbart zu der Schmierstelle vorgesehen. Auf diese Weise ist erreicht, dass alle Schmierstellen eines Schmierkreises eine ähnliche Temperatur innerhalb eines vorgegebenen Temperaturbereiches aufweisen. Die Auswahl an Schmierstellen, bei denen die Temperatur wie beschrieben gemessen wird, kann so vorgenommen werden, dass sie repräsentativ für entsprechende Schmierstellen sind, beispielsweise für Schmierstellen, die von der Funktion her gleich sind, aber zu einer Sektion der I.S.-Glasformmaschine gehören, die aus grundsätzlicher Erfahrung heraus etwas weniger warm ist als die Sektion, bei der die Temperatur der Schmierstelle gemessen wurde.

Ferner ist erfindungsgemäß eine Regelung von den Schmierstellen vorhandenen Schmierstoffmengen vorgesehen. Dazu wird die Länge des Zeitintervalls zwischen zwei Schmierstoffabgaben in Abhängigkeit von Temperaturwerten, die in unmittelbarer Nähe von Schmierstellen eines Schmierkreises gemessen worden sind, eingestellt. Dabei wird ein Verdampfungskennfeld des Schmierstoffs verwendet. Dieses Verdampfungskennfeld gibt in Abhängigkeit der Temperatur den Verdampfungsverlust über die Zeit an. Ein solches Verdampfungskennfeld ist stark abhängig von der Art des Schmierstoffs. So kann bei Ölen, die auf Mineralölbasis aufbauen, der Verdampfungsverlust zehn mal höher liegen als bei speziellen vollsynthetischen Ölen für I.S.-Glasformmaschinen. Daher ist es sinnvoll, bei einer Inbetriebnahme einer I.S.-Glasformmaschine eine Voreinstellung der Zeitintervalllängen der Schmierkreise in Abhängigkeit der Schmierstoffart vorzunehmen. Wenn mehrere verschiedene Schmierstoffarten innerhalb einer Glasformmaschine verwendet werden, können natürlich auch entsprechend mehrere zugehörige Verdampfungskennfelder verwendet werden.

Es kann für die Regelung direkt der in unmittelbarer Nähe der jeweiligen Schmierstelle gemessene Temperaturwert verwendet werden, oder aber auch ein leicht angepasster Temperaturwert, bei dem der geringe Abstand des Messortes von der Schmierstelle berücksichtigt ist.

Der Erfindung liegt die Erkenntnis zugrunde, dass die Temperatur einer Schmierstelle bzw. des dort vorhandenen Schmierstoffs von dominanter Bedeutung dafür ist, inwieweit der Schmierstoff einer Verdampfung unterliegt. Zwischen der Temperatur und der Verdampfungsrate besteht ein nicht-linearer Zusammenhang. So kann je nach Temperaturbereich beispielsweise eine Verringerung der Temperatur um 10 °C eine Verdopplung der Zeitintervalllänge bewirken.

Je nach Position in der I.S.-Glasformmaschine unterliegen die Schmierstellen jedoch gegebenenfalls sehr unterschiedlichen thermischen Belastungen und entsprechend unterschiedlich ist die Notwendigkeit eines Nachschmierens.

Indem erfindungsgemäß alle Schmierstellen, die einer ähnlichen thermischen Belastung ausgesetzt sind, in einem Schmierkreis zusammengefasst sind, besteht die Möglichkeit, sie zur selben Zeit einem Schmiervorgang zu unterziehen. Auf diese Weise kann eine Überversorgung von Schmierstellen mit Schmierstoff, die deutlich geringer thermisch belastet sind als andere Schmierstellen des Schmierkreises, vermieden werden. So kann der Schmierstoffverbrauch gesenkt werden.

Eine Messung der zu bestimmenden Temperaturen an den Schmierstellen ist eine einfache, praktikable Weise, die Temperaturwerte zu ermitteln. Es hat sich herausgestellt, dass ein Algorithmus zur Ermittlung der Temperaturwerte in Abhängigkeit der Prozessparameter Maschinengeschwindigkeit, Artikelgewicht, Fertigungsprozess, Kühlungsart, etc. in der Praxis mit Schwierigkeiten behaftet ist, da zusätzlich noch eine Reihe von äußeren Bedingungen (wie Jahreszeit, Maschinenstandort, Zugluft, etc.) Einfluss auf die Temperatur einer Schmierstelle hat.

Ein wesentlicher Vorteil der Erfindung ist, dass die Zeitintervalle insbesondere so gewählt werden können, dass die jeweiligen Schmierstellen zwar relativ häufig mit einem durch die ausgewählten Schmierstoffverteiler vorgegebenen Schmierstoffquantum versorgt werden, dass aber keine Überschmierung der Schmierstellen stattfindet. Eine häufigere Auftragung von Schmierstoff ist über die Zeit betrachtet qualitativ höherwertig als eine weniger häufige Auftragung eines höheren Schmierstoffquantums bei gleichem Gesamtquantum pro Tag. Dies liegt darin begründet, dass der Schmierstoff über die Zeitdauer, die er sich an der Schmierstelle befindet, in seiner Qualität nachlässt. Eine adäquate Schmierfilmdicke liegt meist im Mikrometer-Bereich. Die Erfindung beinhaltet eine bedarfsgerechte Schmierstoffversorgung durch eine Schmierintervallanpassung.

Bei den Schmierstoffverteilern kann es sich insbesondere um Injektoren handeln.

Als maßgebend für die Festsetzung der Zeitintervalllänge eines Schmierkreises kann der höchste gemessene Temperaturwert aller Schmierstellen eines Schmierkreises genommen werden. Auf diese Weise ist gewährleistet, dass keine Schmierstelle ihrer Temperatur nach eine zu geringe Schmierstoffversorgung bekommt. Insbesondere bei einem relativ kleinen vorbestimmten Temperaturbereich könnte auch vorgesehen sein, einen Mittelwert der gemessenen Temperaturwerte oder einer Auswahl der gemessenen Temperaturwerte als maßgebend heranzuziehen.

Bei der Bestimmung der Zeitintervalllänge eines Schmierkreises können zusätzlich zu der Schmierstellentemperatur auch ein oder mehrere weitere Parameter berücksichtigt werden. So kann die Bestimmung der Zeitintervalllänge insbesondere in Abhängigkeit von kinematischen Bedingungen erfolgen. Hierzu zählt die Maschinengeschwindigkeit, d.h. die Anzahl der Plungerhübe pro Zeiteinheit, und ferner auch die Geschwindigkeit bzw. das Geschindigkeitsprofil von sich an der Schmierstelle bewegenden Maschinenteilen. Ferner können tribologische Bedingungen, wie die Reibungsart oder Reibpaarung von solchen Maschinenteilen, und auch ihre geometrischen Bedingungen, wie die Größenverhältnisse, einbezogen werden. Ferner können die Kühlungsbedingungen bei der Bestimmung der Zeitintervalllänge eingehen, da bei einer Radialkühlung die Schmierstellen auf Höhe der oberen Platte der I.S.-Box (Top-Plate) relativ stark belastet werden, bei einer Axialkühlung hingegen die Schmierstellen über den Formen.

Ferner wird vorzugsweise die Bestimmung der Zeitintervalllänge eines Schmierkreises zusätzlich in Abhängigkeit von Prozessgrößen vorgenommen. Solche Prozessgrößen können beispielsweise das Artikelgewicht, die oben bereits erwähnte Hubzahl des Plungers pro Zeiteinheit und die Feedertemperatur sein. Je nach Artikelgewicht und Maschinengeschwindigkeit wird an jeder Sektion der I.S.-Glasformmaschine mehr oder weniger thermische Energie pro Zeiteinheit während des Formgebungsprozesses freigesetzt, indem die Glastropfen abkühlen bzw. ihnen eine bestimmte Wärmemenge entzogen wird. Entsprechend unterschiedlich ist die Erwärmung der Schmierstellen und variieren die Verdampfungsverluste des Schmierstoffs. Die Temperatur einer Schmierstelle ist bei einer I.S.-Glasformmaschine hauptsächlich durch die im Glasartikel-Herstellungsprozess freigesetzte Wärme begründet.

Das verwendete Verdampfungskennfeld kann als weiteren technischen Parameter auch die Geschwindigkeit eines zu schmierenden bewegten Maschinenteils der Schmierstellen berücksichtigen. Je höher die Geschwindigkeit ist, desto früher muss frischer Schmierstoff nachgeliefert werden. Dabei kann durch die Geschwindigkeit ein temperaturunabhängiger Verlust an Schmierstoff gegeben sein, so dass man auch von einem Verlustkennfeld sprechen könnte.

Da erfindungsgemäß die Schmierstellen innerhalb eines Schmierkreises ähnliche Temperaturen aufweisen, können diese Schmierstellen von der Funktion her deutlich unterschiedlich geartet sein, so dass vorzugsweise die Hübe bzw. die Ausgabequanten der Schmierstoffverteiler eines Schmierkreises unterschiedlich sind.

Es kann ferner vorgesehen sein, dass bei einer Inbetriebnahme einer I.S.-Glasformmaschine eine durch eine Regelungseinrichtung automatisch kontrollierte Einlaufprozedur stattfindet, bei der die Zeitintervalllänge sukzessive heraufgesetzt wird. Denn bei der Inbetriebnahme einer I.S.-Glasformmaschine sind noch nicht alle Reibpartner vollständig mit Schmierstoff benetzt und zum Teil befinden sich auch noch Rückstände von der Montage in den Schmierstellen. Ferner haben sich noch nicht die für eine funktionierende Schmierung erforderlichen Reaktionsschichten aus Schmierstoff, Abrieb, etc. in den Schmierspalten gebildet. Aus diesem Grund wird über mehrere Wochen eine gewisse Einlaufzeit benötigt, bis das Schmiersystem einwandfrei funktioniert. Die automatische Einlaufprozedur erlaubt ein sorgfältiges und sicheres Verstellen der Zeitintervalllängen der Schmierkreise.

Es kann auch vorgesehen sein, dass nach einem Stillstand einer I.S.-Glasformmaschine und bei einem Wiederanlauf der Glasformmaschine eine durch eine Regelungseinrichtung automatisch kontrollierte Wiederanlaufprozedur stattfindet. Bei einem Maschinenstillstand wird die Schmierstoffversorgung unterbrochen, so dass kein Schmierstoff verbraucht wird. Bei der Wiederanlaufprozedur werden zu Beginn alle Schmierstellen so geschmiert, dass die Verdampfungsverluste, die durch die langsame Abkühlung während des Maschinenstillstands entstanden sind, ausgeglichen werden. Auch dabei wird die Zeitintervalllänge sukzessive heraufgesetzt.

Die Aufgabe bezüglich der Vorrichtung wird durch die Merkmale des Anspruchs 7 gelöst. Die Vorrichtung weist eine Schmieranlage mit einer Mehrzahl von Schmierstoffverteilern auf, die zur Ausgabe von Schmierstoff an eine Mehrzahl von Schmierstellen dienen und jeweils einem von mehreren Schmierkreisen zugeordnet sind. Die Schmierstoffverteiler sind vorgesehen, zyklisch bzw. regelmäßig im Abstand eines für den jeweiligen Schmierkreis vorgesehenen Zeitintervalls gleichzeitig ein für jeden Schmierstoffverteiler vorgegebenes Quantum an Schmierstoff auszugeben. Die Vorrichtung weist eine Regelungseinrichtung auf, die dazu dient, die Schmieranlage zu kontrollieren bzw. steuern. Ferner ist bei der Vorrichtung eine Mehrzahl von Temperatursensoren vorgesehen, die zur Messung der Temperatur bei einer Reihe der Schmierstellen oder möglicherweise auch bei allen Schmierstellen dienen und mit der Regelungseinrichtung verbunden sind. Die Temperaturmessung ist in unmittelbarer Nähe der Schmierstellen vorgesehen, und es wird hierzu auch auf die Ausführungen hinsichtlich des erfindungsgemäßen Verfahrens Bezug genommen. Die Schmierstoffverteiler sind den Schmierkreisen derartig zugeordnet, dass die Temperaturen der Schmierstellen eines jeweiligen Schmierkreises innerhalb eines vorbestimmten Temperaturbereiches liegen. Somit ist erreicht, dass die Temperaturen der Schmierstellen eines Schmierkreises nur in einem gewissen, vorgegebenen Maße voneinander abweichen. Die Regelungseinrichtung ist so ausgelegt, dass die Länge des Zeitintervalls eines Schmierkreises unter Berücksichtigung eines Verdampfungskennfeldes des Schmierstoffs in Abhängigkeit von Temperaturen bestimmt ist, die in unmittelbarer Nähe von Schmierstellen des Schmierkreises gemessen worden sind.

Bei dieser erfindungsgemäßen Vorrichtung, die die Ausführung des oben beschriebenen erfindungsgemäßen Verfahrens ermöglicht, ergeben sich entsprechend die in Bezug auf das Verfahren beschriebenen Vorteile.

Dies gilt auch für die in den Ansprüchen 8 bis 12 angegebenen bevorzugten Ausgestaltungen der Vorrichtung.

Bei den Schmierstoffverteilern kann es sich insbesondere um Injektoren handeln.

Im Folgenden wird die Erfindung anhand von Ausführungsbeispielen näher erläutert, wobei auf die Figuren Bezug genommen wird. Es zeigen:
Fig. 1 einen Schaltplan einer Schmieranlage für eine I.S.-Glasformmaschine,
Fig. 2 eine Regelungseinrichtung für die Schmieranlage gemäß Fig. 1,
Fig. 3 eine weitere Ausführungsform einer Regelungseinrichtung mit untergeordneter Steuerungseinrichtung für die Schmieranlage gemäß Fig. 1,
Fig. 4 ein Verdampfungskennfeld, wie es bei der Erfindung verwendet wird.

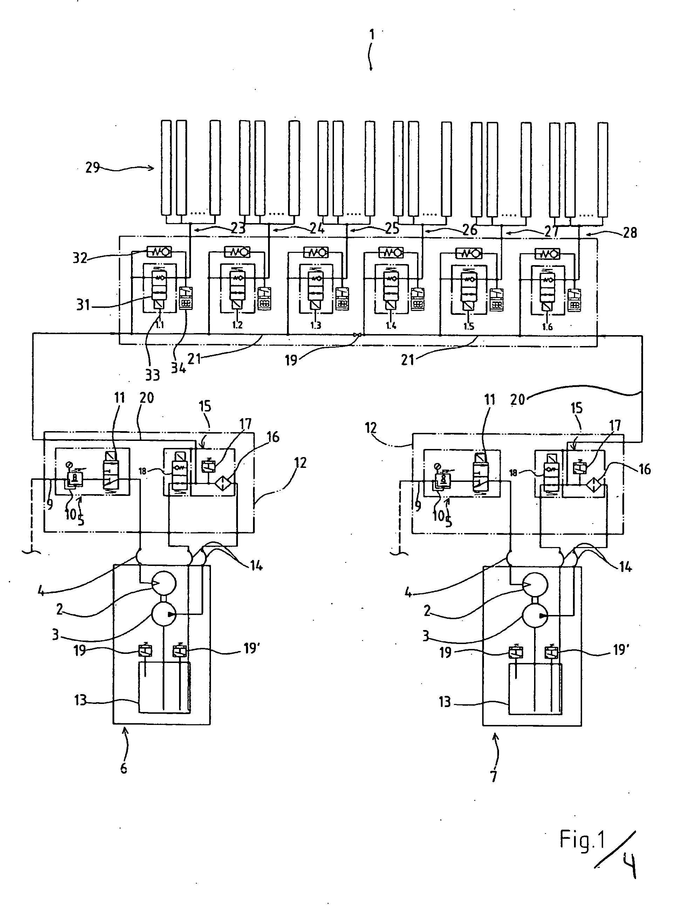

In den Figuren sind gleiche Merkmale mit den gleichen Bezugszeichen bezeichnet. Die Schmieranlage gemäß Fig. 1 ist mit dem Bezugszeichen 1 bezeichnet. Die Schmieranlage 1 weist zwei Tank-/Pumpeneinheiten 6 und 7 auf, die technisch gleich ausgelegt sind, so dass sie mit gleichen Bezugszeichen beschrieben werden. Die beiden Tank-/Pumpeneinheiten 6, 7 dienen dazu, die Schmieranlage 1 mit zwei unterschiedlichen Schmierstoffen zu versorgen, zum Beispiel mit einem Hochtemperaturschmierstoff und einem normalen Schmierstoff.

Jede Tank-/Pumpeneinheit 6, 7 weist einen Druckluftmotor 2 auf, der eine Pumpe 3 antreibt. Der Druckluftmotor 2 ist über eine Luftleitung 4 mit einer Druckluftversorgungseinheit 5 verbunden, die Bestandteil einer Kontrolleinheit 12 ist. Die Druckluftversorgungseinheit 5 weist einen Druckeinsteller 8 auf, der mit einer Druckluftquelle (nicht gezeigt) über eine Luftleitung 9 verbunden ist. Mittels einer Steuerleitung 10 wird der Druck in der Luftleitung 9 an den Druckeinsteller 8 übermittelt.

Zwischen dem Druckeinsteller 8 und der Luftleitung 4 befindet sich ein 2Wege/2Stellungsventil 11, mit dem der Druckluftmotor 2 wahlweise mit Druckluft versorgt werden kann. Die Pumpe 3 dient dazu, aus einem Schmierstoffbehälter 13 über eine Schmierstoffleitung 14 zu einer Schmierstoff-Verteilereinheit 15 zu pumpen. Die Verteilereinheit 15 weist einen Filter 16, einen Druckschalter 17 und ein 2Wege/2Stellungsventil 18 auf. In der Ventilstellung, die in Fig. 1 gezeigt ist, wird der Schmierstoff über die Schmierstoffleitung 14 in den Schmierstoffbehälter 13 zurückgeführt. Der Schmierstoffbehälter 13 weist zur Kontrolle eines maximalen und eines minimalen Füllstandes zwei Druckschalter 19 und 19' auf.

Wenn das Ventil 18 in die andere Stellung geschaltet ist, wird der jeweilige Schmierstoff in eine Schmierstoffleitung 20 gepumpt, wobei ein maximaler Druck durch den Druckschalter 17 gewährleistet ist. Die Schmierstoffleitung 20 mündet in eine weitere Schmierstoffleitung 21, in der ein Verschlussstopfen 19 angeordnet ist. Durch den Verschlussstopfen 19, der die durchgängige Schmierstoffleitung 21 entsprechend unterbricht, erfolgt eine Zuordnung der Tank-/Pumpeneinheiten 6, 7 zu sechs Schmierkreisen 23 bis 28. Über die Schmierstoffleitungen 20, 21 gelangt der jeweilige Schmierstoff zu den Schmierkreisen 23 bis 28.

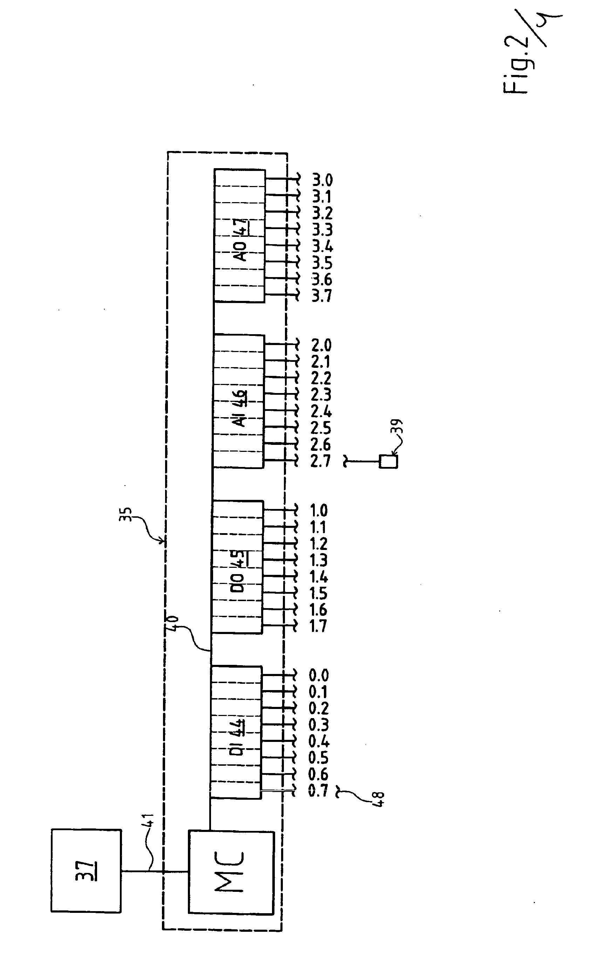

Da die Schmierkreise 23 bis 28 grundsätzlich gleich gestaltet sind, wird hier exemplarisch nur der Schmierkreis 23 beschrieben. Er weist eine Reihe von zur Ausgabe von Schmierstoff vorgesehenen Schmierstoffverteilern auf, von denen exemplarisch nur drei dargestellt sind und die in ihrer Gesamtheit mit dem Bezugszeichen 29 bezeichnet sind. Bei den Schmierstoffverteilern 29 kann es sich beispielsweise um Injektoren handeln. Der Schmierkreis 23 ist mit der Schmierstoffleitung 21 über ein weiteres 2Wege/2Stellungsventil 31 verbunden. Parallel zu dem Ventil 31 ist ein Rückschlagventil 32 angeordnet. Das Ventil 31 wird über eine Steuerleitung 33 durch die in Fig. 2 gezeigte Regelungseinrichtung in die in Fig. 1 gezeigte Sperrstellung oder in die Durchlassstellung geschaltet.

Normalerweise befindet sich das Ventil 18 in der Sperrstellung, statt in der gezeigten Durchlassstellung. In der Sperrstellung wird ein entsprechender Druck des Schmierstoffs in der Schmierstoffleitung 21 aufgebaut. Wenn das Ventil 31 kurzfristig in die Durchlassstellung geschaltet wird, geben die Schmierstoffverteiler 29 ein vorgegebenes Quantum Schmierstoff an eine zugehörige Schmierstelle (nicht gezeigt) der I.S.-Glasformmaschine ab. Dieses Schmierstoffquantum kann für die einzelnen Schmierstoffverteiler 29 des Schmierkreises 23 bzw. der anderen Schmierkreise 24 bis 28 unterschiedlich sein. Um solche unterschiedlichen Schmierstoffabgaben zu erreichen, kann der Hub eines jeweiligen Schmierstoffverteilers entsprechend in bekannter Weise eingestellt werden. Das Rückschlagventil 32 dient zu einer schnellen Entlüftung, um den Schmierstoffverteiler 29 schnell drucklos schalten zu können. Zur Überwachung dieses Vorgangs und auch zur Detektion einer eventuellen Leckage ist zwischen dem Ventil 31 und den Schmierstoffverteilern 29 ein Druckschalter 34 angeordnet.

Die Regelungseinrichtung gemäß Fig. 2 ist mit dem Bezugszeichen 35 bezeichnet und weist einen Mikrocomputer MC auf. Der Mikrocomputer MC ist mit einem Eingabe/Ausgabebus 40 versehen, an den nach Bedarf ein Modul DI mit digitalen Eingängen 44, ein Modul DO mit digitalen Ausgängen 45, ein Modul Al mit analogen Eingängen 46 und ein Modul AO mit analogen Ausgängen 47 angeschlossen werden können. Exemplarisch sind je Modul nur acht Ein- bzw. Ausgänge dargestellt.

An die analogen Eingänge 46 werden Temperatursensoren 39 angeschlossen, die innerhalb der Schmierkreise 23 bis 28 angeordnet sind und dazu dienen, die Temperatur in unmittelbarer Nähe von verschiedenen Schmierstellen zu messen. Es ist nur ein Temperatursensor 39 exemplarisch dargestellt. An den digitalen Ausgängen 45 werden Steuersignale über jeweilige Steuerleitungen 1.1 bis 1.6 an die entsprechend bezeichneten Steuerleitungen 33 zu den Ventilen 31 der Schmierkreise 23 bis 28 abgegeben. Durch die Steuersignale werden die Ventile 31 in Durchlassrichtung geschaltet, um die Abgabe von Schmierstoff durch den jeweiligen Schmierstoffverteiler 29 zu bewirken. Die mit 1.7 bezeichnete Steuerleitung dient beispielhaft dazu, weitere Komponenten der Schmieranlage 1 zu steuern, wie zum Beispiel das Ventil 11 zum Antrieb der Pumpe 3.

Die digitalen Eingänge 44 dienen zur Erfassung von Signalen, die maschinenrelevant sind und die Länge des Zeitintervalls beeinflussen, nach dem jeweils Schmierstoff ausgegeben wird. Exemplarisch ist ein mit dem Bezugszeichen 48 bezeichnetes Maschinentaktsignal symbolisch dargestellt.

Die analogen Ausgänge 47 sind bei der gezeigten Regelungseinrichtung 35 nicht verwendet. Sie sind vorgesehen für etwas abweichende Ausführungsformen der Schmieranlage, wobei zum Beispiel anstelle der Schmierstoffpumpe 3 eine elektrisch betriebene Schmierstoffpumpe verwendet wird. Bei einer solchen Ausführungsform ist eine Regelung der Spannung notwendig, um den Druck in der Schmierstoffleitung 20 auf einem betriebstauglichen Wert zu halten.

Die Länge der Zeitintervalle, in denen regelmäßig Steuersignale durch jeweils eine der Steuerleitungen 1.1 bis 1.6 an die Ventile 31 abgegeben werden, wird berechnet auf der Grundlage von Maschinensignalen. Zu diesen Maschinensignalen gehören Temperaturwerte, die von den Temperatursensoren 39 gemessen worden sind, und das Maschinentaktsignal 48. Bei der Berechnung können ferner spezifische Merkmale der gefährdetsten Schmierstelle in dem jeweiligen Schmierkreis eingehen, wie zum Beispiel die Oberflächenbeschaffenheit, die Laufgeschwindigkeit, ein axialer Schmierstoffaustritt, etc., und spezifische Merkmale des verwendeten Schmierstoffs (Verdampfungskennfeld). Die Länge des Zeitintervalls bzw. die Schmierzykluszeit wird in regelmäßigen Zeitabständen innerhalb des Regelungsvorgangs angepasst.

Die Regelungseinrichtung 35 gemäß Fig. 2 eignet sich insbesondere dann, wenn eine vorhandene I.S.-Glasformmaschine mit einer erfindungsgemäßen Vorrichtung zur Versorgung mit Schmierstoff ausgestattet bzw. nachgerüstet werden soll.

Über ein vom Mikrocomputer MC bereitgestelltes Bussystem 41, welches hier als Ethernet zur einfachen Anbindung an einen PC vorgesehen ist, erfolgt direkt auf einem PC 37 eine Visualisierung. Andere Visualisierungen sind hier als Variation denkbar.

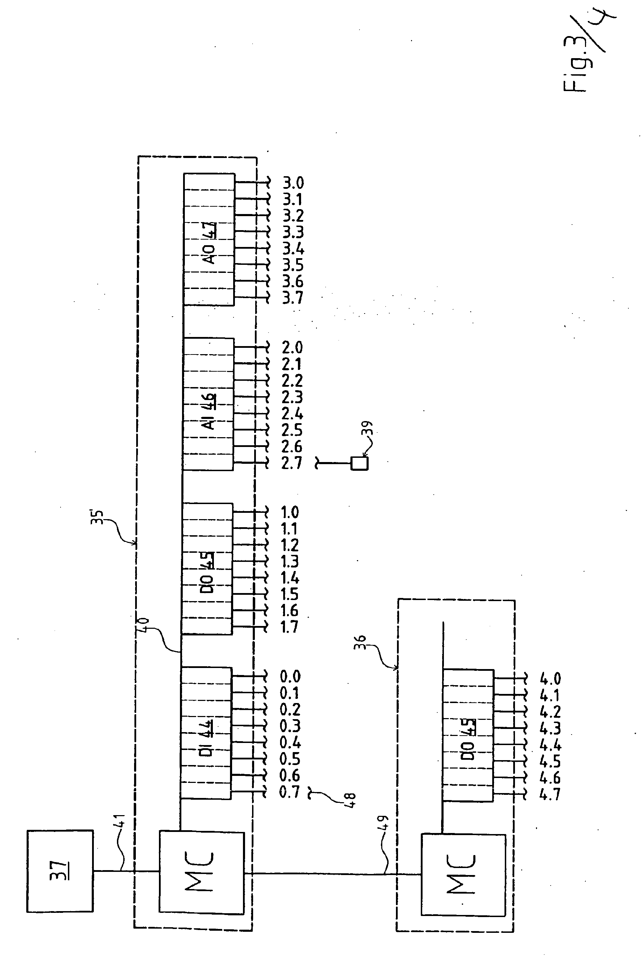

Alternativ kann auch gemäß Fig. 3 eine Kombination einer Regelungseinrichtung 35' und einer Steuerungseinheit 36 verwendet. Die Regelungseinrichtung 35' hat die Aufgabe, Maschinensignale, wie die durch die Temperatursensoren 39 gemessenen Temperaturwerte und den Maschinentakt 48, zu erfassen und ein geregeltes Zeitintervall wie oben beschrieben zu generieren. Die Regelungseinrichtung 35' sendet die Information betreffend das Zeitintervall über ein Feldbussystem 49 an die Steuerungseinheit 36, die ebenfalls einen Mikrocomputer MC aufweist. Eine erforderliche Änderung bzw. Nachjustierung des Zeitintervalls wird auf diese Weise durch die Regelungseinrichtung 35' an die Steuerungseinheit 36 gegeben.

Die Steuerungseinheit 36 steuert über digitale Ausgänge 4.1 bis 4.6 eines Moduls DO die Ventile 31 und über weitere, mit 4.0 und 4.7 nur teilweise gezeigte Modulausgänge alle weiteren Komponenten der Schmierstoffanlage 1 an, wie zum Beispiel das Ventil 11 zum Antrieb der Pumpe 3 gemäß voreingestellten Zeitintervallen.

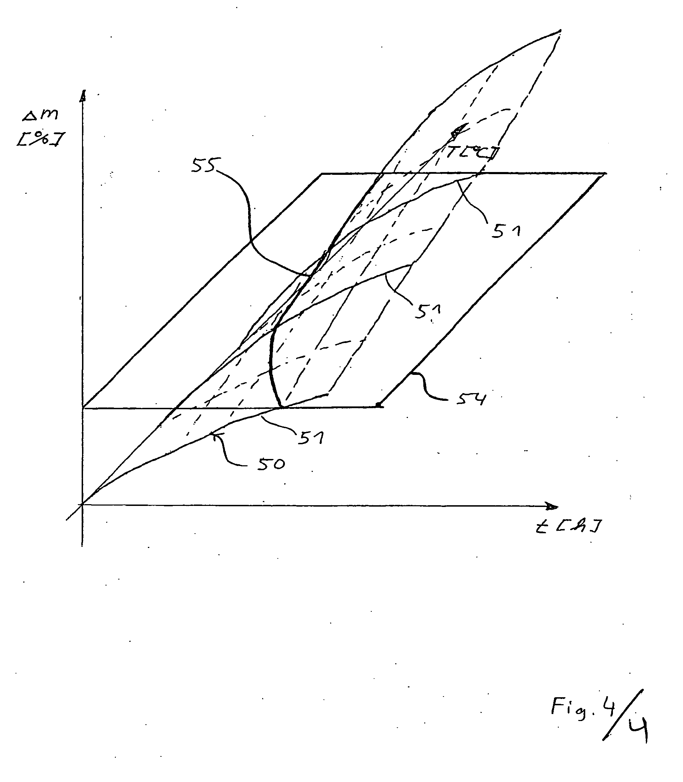

Das Kennfeld gemäß Fig. 4 ist mit dem Bezugszeichen 50 versehen und könnte auch als "Kennlinienfeld" bezeichnet werden. Das Kennfeld 50 stellt für einen bestimmten Schmierstoff, nämlich hier ein bestimmtes Schmieröl einer Zentralschmieranlage, den Funktionszusammenhang der drei technischen Parameter Verdampfungsverlust Δm an einer Schmierstelle, Temperatur T der Schmierstelle und Zeit t dar. Vereinfachend wird dabei von der Temperatur nur einer für sich betrachteten Schmierstelle ausgegangen und zur Erklärung des Prinzips unberücksichtigt gelassen, dass eine Mehrzahl von Schmierstellen wie oben beschrieben zu einem Schmierkreis zusammmengefasst ist.

Der als Verlust der Masse m des Schmieröls und bezogen auf die ursprünglich vorhandene Schmierölmenge in Prozenten dargestellte Verdampfungsverlust Δm steigt mit der Zeit an. Dies bedeutet, dass sich die Menge des an der jeweiligen Schmierstelle vorhandenen Schmieröls über die Zeit verringert. Der über die Zeit stattfindende Verdampfungsverlust hängt jedoch wesentlich von der an der Schmierstelle vorhandenen Temperatur ab. Somit gehört zu jedem Temperaturwert eine Kennlinie 51, die den Zusammenhang zwischen dem Verdampfungsverlust und der Zeit darstellt. Das Kennfeld 50 besteht aus einer Schar von Kennlinien 51. Je höher die Temperatur an der Schmierstelle ist, desto größer ist der Verdampfungsverlust.

Erfindungsgemäß besteht die Vorgabe, dass zwischen zwei Schmiervorgängen innerhalb eines Schmierzyklus nur ein bestimmter maximaler Verdampfungsverlust entstehen darf. Dies bedeutet, dass umso häufiger geschmiert werden muss, je höher die Temperatur an den Schmierstellen eines Schmierkreises ist. Daraus folgt, dass dann, wenn die Temperatur einer Schmierstelle ansteigen sollte, die Zeit zwischen zwei Schmiervorgängen entsprechend verkürzt werden muss, um den Verdampfungsverlust an der Schmierstelle den vorgesehenen Maximalwert nicht überschreiten zu lassen.

In dem Diagramm der Fig. 4 ist eine Ebene 54 eingezeichnet, die durch die Zeitachse t und die Temperaturachse T aufgespannt ist und in der der Verdampfungsverlust einen konstanten Wert aufweist. Hierbei kann es sich um den maximal zulässigen Verdampfungsverlust zwischen zwei Schmiervorgängen handeln bzw. um einen geringfügig darunter liegenden Verdampfungsverlustwert. Um diesen Verdampfungsverlustwert zwischen zwei Schmiervorgägnen nicht zu überschreiten, muss die Zeit gemäß der Zeitachse t zwischen den Schmiervorgängen verkürzt werden, wenn sich die Temperatur T erhöht. Entsprechend kann natürlich die Zeitintervalllänge zwischen den Schmiervorgängen eines zu einem Schmierkreis gehörenden Schmierzyklus verringert werden, wenn die Temperatur sinkt. Daraus ergibt sich eine Regelungskennlinie 55. Die Regelungskennlinie 55 ist durch den Schnittgraph der Ebene 54 und des Kennfeldes 50 gegeben. Die Regelungskennlinie 55 beschreibt in Abhängigkeit der Temperatur T die einzustellende Länge des Zeitintervalls zwischen zwei aufeinanderfolgenden Schmiervorgängen eines Schmierzyklus.

Ein solches Kennfeld kann im Labor für einen Schmierstoff bzw. eine Schmieröl ermittelt werden, in dem unter definierten Bedingungen für verschiedene Temperaturstufen in Zeitabständen der Verdampfungsverlust gemessen wird. Da bei der Vorrichtung gemäß Fig. 1 zwei unterschiedliche Schmierstoffe verwendet werden, wird die Regelung unter Verwendung zweier zugehöriger Verdampfungskennfelder durchgeführt.

## Patentansprüche

1. Verfahren zur Versorgung einer Mehrzahl von zu schmierenden Schmierstellen einer I.S.-Glasformmaschine,
wobei eine Schmieranlage (1) mit einer Mehrzahl von Schmierstoffverteilern (29) verwendet wird, die zur Ausgabe von Schmierstoff an die Schmierstellen der I.S.-Glasformmaschine vorgesehen sind und jeweils einem von mehreren Schmierkreisen (23-28) zugeordnet sind,
und wobei die Schmierstoffverteiler (29) eines jeweiligen Schmierkreises (23-28) zyklisch mit einem dem Schmierkreis (23-28) zugeordneten Zeitintervall gleichzeitig jeweils ein vorgegebenes Quantum Schmierstoff ausgeben,
**dadurch gekennzeichnet, dass** die Zuordnung der Schmierstoffverteiler (29) zu Schmierkreisen (23-28) in Abhängigkeit von Temperaturen, die in unmittelbarer Nähe von zumindest einer Reihe der Schmierstellen gemessen worden sind, so erfolgt, dass die Temperaturen der Schmierstellen eines Schmierkreises (23-28) innerhalb eines vorbestimmten Temperaturbereiches liegen,
und dass eine Regelung einer an den Schmierstellen jeweils vorhandenen Schmierstoffmenge stattfindet, indem die Bestimmung der Länge des einem Schmierkreis zugeordneten Zeitintervalls in Abhängigkeit von in unmittelbarer Nähe von Schmierstellen des Schmierkreises gemessenen Temperaturen unter Verwendung eines Verdampfungskennfeldes (50) des Schmierstoffs erfolgt.

2. Verfahren nach Anspruch 1,
**dadurch gekennzeichnet, dass** für die Bestimmung der Zeitintervalllänge die höchste der gemessenen Schmierstellen-Temperaturen als maßgebend herangezogen wird.

3. Verfahren nach einem der vorhergehenden Ansprüche,
**dadurch gekennzeichnet, dass** die Bestimmung der Zeitintervalllänge zusätzlich in Abhängigkeit von einem oder mehreren Parametern aus der Gruppe kinematische Bedingungen, tribologische Bedingungen, geometrische Bedingungen, Kühlungsbedingungen und Prozessgrößen erfolgt.

4. Verfahren nach Anspruch 3,
**dadurch gekennzeichnet, dass** bei dem Verdampfungskennfeld (50) auch Geschwindigkeitswerte der Schmierstellen eingehen.

5. Verfahren nach einem der vorhergehenden Ansprüche,
**dadurch gekennzeichnet, dass** die Schmierstoffverteiler (29) eines Schmierkreises (23-28) ausgelegt sind, ein auf die jeweilige Schmierstelle abgestimmtes Quantum an Schmierstoff auszugeben.

6. Verfahren nach einem der vorhergehenden Ansprüche,
**dadurch gekennzeichnet, dass** bei einer Inbetriebnahme der I.S.-Glasformmaschine eine automatische Einlaufprozedur stattfindet, bei der die Zeitintervalllänge sukzessive heraufgesetzt wird.

7. Vorrichtung zur Versorgung einer I.S. (Individual Section)-Glasformmaschine mit Schmierstoff an einer Mehrzahl von zu schmierenden Schmierstellen,
aufweisend eine Schmieranlage (1) mit einer Mehrzahl von Schmierstoffverteilern (29) zur Ausgabe des Schmierstoffs, wobei die Schmierstoffverteiler (29) jeweils einem von mehreren Schmierkreisen (23-28) zugeordnet sind und die Schmierstoffverteiler (29) eines jeweiligen Schmierkreises (23-28) vorgesehen sind, zyklisch mit einem dem Schmierkreis (23-28) zugeordneten Zeitintervall gleichzeitig jeweils ein vorgegebenes Quantum Schmierstoff auszugeben,
**dadurch gekennzeichnet, dass** die Vorrichtung eine die Schmieranlage (1) kontrollierende Regelungseinrichtung (35;35') und eine Mehrzahl von mit der Regelungseinrichtung (35;35') verbundenen Temperatursensoren (39) zur Messung von Temperaturen in unmittelbarer Nähe von zumindest einer Reihe der Schmierstellen aufweist,
dass die Schmierstoffverteiler (29) den Schmierkreisen (23-28) so zugeordnet sind, dass die Temperaturen der Schmierstellen eines Schmierkreises (23-28) innerhalb eines vorbestimmten Temperaturbereiches liegen,
und dass die Regelungseinrichtung (35;35') so ausgelegt ist, dass die Länge des einem Schmierkreis (23-28) zugeordneten Zeitintervalls in Abhängigkeit von in unmittelbarer Nähe von Schmierstellen des Schmierkreises gemessenen Temperaturen unter Berücksichtigung eines Verdampfungskennfeldes (50) des Schmierstoffs bestimmt ist.

8. Vorrichtung nach Anspruch 7,
**dadurch gekennzeichnet, dass** für die Bestimmung der Zeitintervalllänge die höchste der gemessenen Schmierstellen-Temperaturen maßgebend ist.

9. Vorrichtung nach Anspruch 7 oder 8,
**dadurch gekennzeichnet, dass** die Zeitintervalllänge zusätzlich in Abhängigkeit von einem oder mehreren Parametern aus der Gruppe kinematische Bedingungen, tribologische Bedingungen, geometrische Bedingungen, Kühlungsbedingungen und Prozessgrößen bestimmt ist.

10. Vorrichtung nach Anspruch 9,
**dadurch gekennzeichnet, dass** bei dem Verdampfungskennfeld (50) auch Geschwindigkeitswerte der Schmierstellen eingehen.

11. Vorrichtung nach einem der Ansprüche 7 bis 10,
**dadurch gekennzeichnet, dass** die Schmierstoffverteiler (29) eines Schmierkreises (23-28) ausgelegt sind, ein auf die jeweilige Schmierstelle abgestimmtes Quantum an Schmierstoff auszugeben.

12. Vorrichtung nach einem der Ansprüche 7 bis 11,
**dadurch gekennzeichnet, dass** die Regelungseinrichtung (35;35') so ausgelegt ist, dass bei einer Inbetriebnahme der I.S.-Glasformmaschine eine automatische Einlaufprozedur, bei der die Zeitintervalllänge sukzessive zunimmt, stattfinden kann.

## Claims

1. Method of supplying a plurality of lubricating points, which are to be lubricated, of an I.S. glassware forming machine,
wherein a lubrication system (1) is used having a plurality of lubricant metering devices (29) which are provided for outputting lubricant to the lubricating points of the I.S. glassware forming machine and are allocated in each case to one of several lubrication circuits (23-28),
and wherein the lubricant metering devices (29) of a respective lubrication circuit (23-28) simultaneously output a predetermined amount of lubricant in each case cyclically with a time interval allocated to the lubrication circuit (23-28),
**characterised in that** the lubricant metering devices (29) are allocated to lubrication circuits (23-28) in dependence upon temperatures, which have been measured in immediate proximity to at least a series of lubricating points, such that the temperatures of the lubricating points of a lubrication circuit (23-28) are within a predetermined temperature range,
and **in that** an amount of lubricant provided in each case at the lubricating points is regulated **in that** the length of the time interval allocated to a lubrication circuit is determined in dependence upon temperatures, which have been measured in immediate proximity to lubricating points of the lubrication circuit, using a set of evaporation characteristics (50) of the lubricant.

2. Method as claimed in claim 1,
**characterised in that** the highest one of the measured temperatures of the lubricating points is used as the decisive factor for determining the time interval length.

3. Method as claimed in any one of the preceding claims,
**characterised in that** the time interval length is determined in addition in dependence upon one or several parameters from the following group: kinematic conditions, tribological conditions, geometric conditions, cooling conditions and process variables.

4. Method as claimed in claim 3,
**characterised in that** speed values of the lubricating points are also incorporated in the set of evaporation characteristics (50).

5. Method as claimed in any one of the preceding claims,
**characterised in that** the lubricant metering devices (29) of a lubrication circuit (23-28) are designed to output an amount of lubricant which is adapted to the respective lubricating point.

6. Method as claimed in any one of the preceding claims,
**characterised in that** when starting up the I.S. glassware forming machine an automatic running-in procedure takes place, in which the time interval length is successively increased.

7. Device for supplying an I.S. (Individual Section) glassware forming machine with lubricant at a plurality of lubricating points which are to be lubricated,
comprising a lubrication system (1) having a plurality of lubricant metering devices (29) for outputting the lubricant, wherein the lubricant metering devices (29) are allocated in each case to one of several lubrication circuits (23-28) and the lubricant metering devices (29) of a respective lubrication circuit (23-28) are provided to simultaneously output a predetermined amount of lubricant in each case cyclically with a time interval allocated to the lubrication circuit (23-28),
**characterised in that** the device comprises a regulating device (35; 35'), which monitors the lubrication system (1), and a plurality of temperature sensors (39), which are connected to the regulating device (35; 35'), for measuring temperatures in immediate proximity to at least a series of lubricating points,
the lubricant metering devices (29) are allocated to the lubrication circuits (23-28) such that the temperatures of the lubricating points of a lubrication circuit (23-28) are within a predetermined temperature range,
and the regulating device (35; 35') is designed such that the length of the time interval allocated to a lubrication circuit (23-28) is determined in dependence upon temperatures, which have been measured in immediate proximity to lubricating points of the lubrication circuit, taking into account a set of evaporation characteristics (50) of the lubricant.

8. Device as claimed in claim 7,
**characterised in that** the highest one of the measured temperatures of the lubricating points is the decisive factor for determining the time interval length.

9. Device as claimed in claim 7 or 8,
**characterised in that** the time interval length is determined in addition in dependence upon one or several parameters from the following group: kinematic conditions, tribological conditions, geometric conditions, cooling conditions and process variables.

10. Device as claimed in claim 9,
**characterised in that** speed values of the lubricating points are also incorporated in the set of evaporation characteristics (50).

11. Device as claimed in any one of claims 7 to 10,
**characterised in that** the lubricant metering devices (29) of a lubrication circuit (23-28) are designed to output an amount of lubricant which is adapted to the respective lubricating point.

12. Device as claimed in any one of claims 7 to 11,
**characterised in that** the regulating device (35; 35') is designed such that when starting up the I.S. glassware forming machine an automatic running-in procedure can take place, in which the time interval length increases successively.

## Revendications

1. Procédé pour fournir un lubrifiant dans une pluralité de zones à lubrifier d'une machine sectionnelle de formage du verre,
dans lequel est utilisée une installation de lubrification (1) avec une pluralité de distributeurs de lubrifiant (29) qui sont prévus pour la distribution du lubrifiant au niveau des zones à lubrifier de la machine sectionnelle de formage du verre et sont associés respectivement à un circuit de lubrification parmi une pluralité de circuits de lubrification (23 - 28),
et dans lequel, les distributeurs de lubrifiant (29) d'un circuit de lubrification (23 - 28) respectif distribuent cycliquement avec un intervalle de temps associé au circuit de lubrification (23 - 28) simultanément, dans chaque cas, une quantité prédéfinie de lubrifiant,
**caractérisé en ce que** l'association des distributeurs de lubrifiant (29) aux circuits de lubrification (23 - 28) est effectuée en fonction des températures qui ont été mesurées à proximité immédiate d'au moins une série de zones à lubrifier, de telle sorte que les températures des zones à lubrifier d'un circuit de lubrification (23 - 28) se situent à l'intérieur d'une plage de températures prédéterminée,
et **en ce qu'**un réglage d'une quantité de lubrifiant disponible respectivement au niveau des zones à lubrifier se produit du fait que la longueur de l'intervalle de temps associé à un circuit de lubrification est déterminée en fonction des températures mesurées à proximité immédiate des zones à lubrifier du circuit de lubrification moyennant l'utilisation d'un diagramme caractéristique d'évaporation (50) du lubrifiant.

2. Procédé selon la revendication 1, **caractérisé en ce que** la température la plus élevée des températures mesurées au niveau des zones à lubrifier est pertinente pour la détermination de la longueur d'un intervalle de temps.

3. Procédé selon l'une quelconque des revendications précédentes, **caractérisé en ce que** la détermination de la longueur d'un intervalle de temps est effectuée, en plus, en fonction d'un ou de plusieurs paramètres issus du groupe des conditions cinématiques, des conditions tribologiques, des conditions géométriques, des conditions de refroidissement et des grandeurs du processus.

4. Procédé selon la revendication 3, **caractérisé en ce que** dans le diagramme caractéristique d'évaporation (50) sont également prises en compte des valeurs de vitesse des zones à lubrifier.

5. Procédé selon l'une quelconque des revendications précédentes, **caractérisé en ce que** les distributeurs de lubrifiant (29) d'un circuit de lubrification (23 - 28) sont configurés de manière à distribuer une quantité de lubrifiant ajustée à la zone à lubrifier respective.

6. Procédé selon l'une quelconque des revendications précédentes, **caractérisé en ce que** lors de la mise en service de la machine sectionnelle de formage du verre est effectuée une procédure de démarrage automatique, dans laquelle la longueur d'un intervalle de temps est augmentée successivement.

7. Dispositif pour fournir du lubrifiant dans une machine sectionnelle de formage du verre au niveau d'une pluralité de zones à lubrifier,
comportant une installation de lubrification (1) avec une pluralité de distributeurs de lubrifiant (29) destinés à distribuer le lubrifiant, lesdits distributeurs de lubrifiant (29) étant associés respectivement à un circuit de lubrification parmi une pluralité de circuits de lubrification (23 - 28), les distributeurs de lubrifiant (29) d'un circuit de lubrification (23 - 28) respectif étant prévus pour distribuer cycliquement avec un intervalle de temps associé au circuit de lubrification (23 - 28) simultanément, dans chaque cas, une quantité prédéfinie de lubrifiant,
**caractérisé en ce que** le dispositif comporte un dispositif de réglage (35 ; 35'), destiné à contrôler l'installation de lubrification (1), et une pluralité de capteurs de température (39), reliés au dispositif de réglage (35 ; 35') et destinés à mesurer les températures à proximité immédiate d'au moins une série de zones à lubrifier,
**en ce que** les distributeurs de lubrifiant (29) sont associés aux circuits de lubrification (23 - 28) de telle sorte que les températures des zones à lubrifier d'un circuit de lubrification (23 - 28) se situent à l'intérieur d'une plage de températures prédéterminée,
et **en ce que** le dispositif de réglage (35 ; 35') est configuré de telle sorte que la longueur de l'intervalle de temps associé à un circuit de lubrification (23 - 28) est déterminée en fonction des températures mesurées à proximité immédiate des zones à lubrifier du circuit de lubrification en tenant compte d'un diagramme caractéristique d'évaporation (50) du lubrifiant.

8. Dispositif selon la revendication 7, **caractérisé en ce que** la température la plus élevée des températures mesurées au niveau des zones à lubrifier est pertinente pour la détermination de la longueur d'un intervalle de temps.

9. Dispositif selon la revendication 7 ou 8, **caractérisé en ce que** la détermination de la longueur d'un intervalle de temps est effectuée, en plus, en fonction d'un ou de plusieurs paramètres issus du groupe des conditions cinématiques, des conditions tribologiques, des conditions géométriques, des conditions de refroidissement et des grandeurs du processus.

10. Dispositif selon la revendication 9, **caractérisé en ce que** dans le diagramme caractéristique d'évaporation (50) sont également prises en compte des valeurs de vitesse des zones à lubrifier.

11. Dispositif selon l'une quelconque des revendications 7 à 10, **caractérisé en ce que** les distributeurs de lubrifiant (29) d'un circuit de lubrification (23 - 28) sont configurés de manière à distribuer une quantité de lubrifiant ajustée à la zone à lubrifier respective.

12. Dispositif selon l'une quelconque des revendications 7 à 11, **caractérisé en ce que** le dispositif de réglage (35 ; 35') est conçu de telle sorte que, lors de la mise en service de la machine sectionnelle de formage du verre, il est possible d'effectuer une procédure de démarrage automatique, dans laquelle la longueur d'un intervalle de temps augmente successivement.
